# EUROPEAN PATENT APPLICATION

(11) **EP 2 003 049 A1**
(43) Date of publication of application: **17.12.2008**
(21) Application number: 07011660.3
(22) Date of filing: 14.06.2007
(51) Int. Cl.: B62K 21/06

(54) **Bearing assembly for a steering apparatus of a bicycle**

(71) Applicant: CHIN HAUR INDUSTRY CO., LTD., Ta-Liao Hsiang, Kaohsiung Hsien (TW)
(72) Inventor: Lin, King-Chen, Ta-Liao Hsiang, Kaohsiung Hsien (TW)
(74) Representative: Schildberg, Peter

(57) **Abstract**

A bearing assembly (10) for a steering apparatus of a bicycle has a bearing (11) with a frame race (113), a fork race (111) and multiple ball bearings (112) mounted between the frame and fork races (111,113), a buffer ring (12) and an end cap (13). The buffer ring (12) has a buffer segment (121) abutting an outer face of the fork race (111). The end cap (13) has an inner face abutting an outer face of the buffer segment (121). The buffer segment (121) is resilient, so can effectively absorb vibrations in the bearing (11), the end cap (13) and the shank (921) and is mounted compressed to ensure the buffer presses against the end cap (13), the bearing (11) and the shank (921). Thus, the steering apparatus is easily assembled and operates smoothly.

## Description

### 1. Field of the Invention

The present invention relates to a bearing assembly, and more particularly to bearing assembly for a steering apparatus of a bicycle and that can provide an improved anti-vibration effect and is easily assembled.

### 2. Description of Related Art

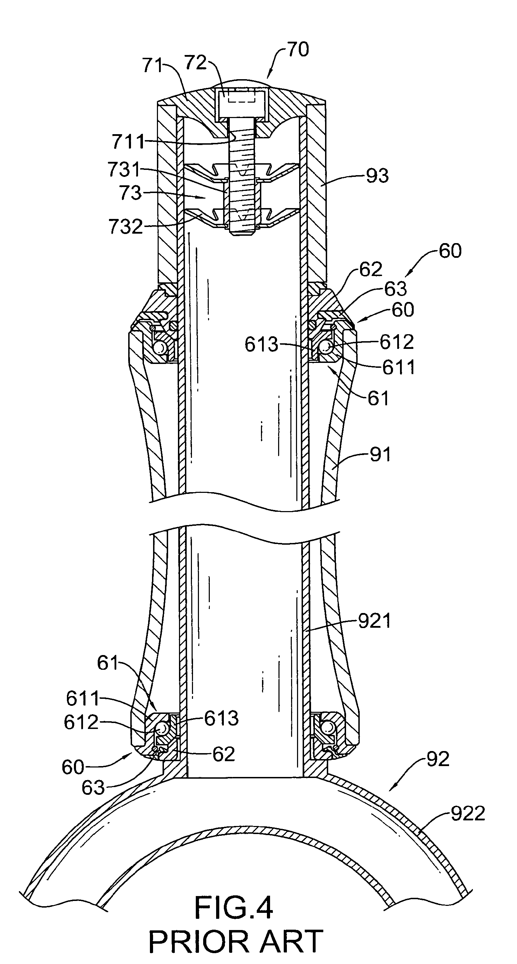

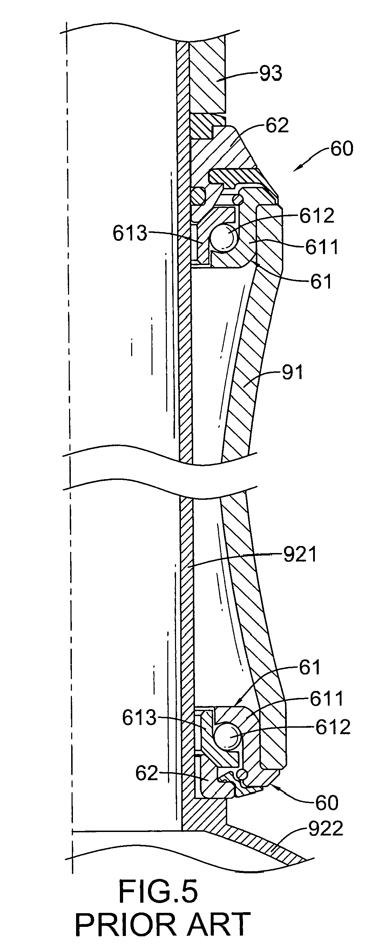

With reference to Figs. 4 and 5, a conventional steering apparatus of a bicycle has a front fork (92), a head tube (91), a headset assembly (60), a stem (93) and a fastening device (70). The front fork (92) has a shank (921) and two legs (922). The shank (921) has a top end, a bottom end and an inner wall. The legs (922) protrude from the bottom end of the shank (921) for holding a front wheel of the bicycle. The head tube (91) is mounted around the shank (921) of the front fork (92) and has a top end and a bottom end.

The headset assembly (60) in accordance with the prior art has an upper bearing assembly (60) and a lower bearing assembly (60). The bearing assemblies (60) are respectively attached to the top end and the bottom end of the head tube (91) and each of the bearing assemblies (60) has a bearing (61), an end cap (62) and a protection cover (63). The bearing (61) is mounted on a corresponding end of the head tube (91) around the shank (911) of the front fork (92) and has an outer face, a frame race (611), a fork race (613) and multiple ball bearings (612). The frame race (611) is mounted securely on the corresponding end of the head tube (91) around the shank (921) of the front fork (92) and has an outer face. The fork race (613) is mounted rotatably on the outer face of the frame race (611) around the shank (921) of the front fork (92) and has an outer face. The ball bearings (612) are mounted rotatably between the frame race (611) and the fork race (613) to allow a relative rotation between the frame race (611) and the fork race (613).

The end cap (62) is mounted on the outer face of the bearing (61) around the shank (921) of the front fork (92) and has an inner section and an outer section. The inner section of the end cap (62) abuts securely on the outer face of the fork race (613) to rotate simultaneously with the distal face of the fork race (613). The protection cover (63) is mounted between the outer section of the end cap (62) and the distal face of the frame race (611) to prevent water or dust from penetrating into the bearing (61). The stem (93) is mounted securely around the top end of the shank (921) of the front fork (92) and abuts securely against the end cap (62), so that when the stem (93) is turned, the front fork (92) is turned simultaneously to turn the front wheel to a desired direction.

The fastening device (70) is mounted on the top end of the shank (921) of the front fork (92) and has a top cap (71), a stem bolt (72) and a fastening nut (73). The top cap (71) is mounted on the stem (93) and has a mounting hole (711). The mounting hole (711) is formed coaxially through the top cap (71). The stem bolt (72) is mounted rotatably through the mounting hole (711) of the top cap (71) and is mounted in the stem (93). The fastening nut (73) is securely mounted in the stem (93) and has a threaded shaft (731) and multiple blades (732). The shaft (731) is mounted around the stem bolt (72) to allow the stem bolt (72) to move along the shaft (731) when the stem bolt (72) is rotated. The blades (732) are formed on and protrude outward from the shaft (731) and abut securely against the inner wall of the shank (921) of the front fork (92) to firmly hold the fastening nut (73) at a position inside the shank (93).

In assembly, when the stem bolt (72) is rotated, the stem bolt (72) will be moved down along the shaft (731) of the fastening nut (73) to push the top cap (71) downward. Consequently, the stem (93) is pushed downward to firmly abut against the end cap (13) of the upper bearing assembly (10) and exert an axial force. The axial force pushes the top cap (71) downward and press the stem (93) downward to firmly abut against the end cap (62) of the upper bearing assembly (60). Consequently, the head tube (91) is firmly but rotatably mounted between the bearing assemblies (60).

However, the axial force is difficult to controll in an adequate range. When the exerted axial force is too large, the end cap (62) presses too tightly against the fork race (613), the ball bearings (612) are prevented from running and the bearing (61) does not rotate smoothly. When the axial force is too small, the end caps (62) are unable to press firmly against the fork races (613), causing severe vibrations between the end caps (62) and the fork races (613). The severe vibrations may break the head tube (91) or the shank (921) of the front fork (92), especially if a carbon-fiber-made head tube (91) or shank (921) is used.

Additionally, after long term use, the ball bearings (612) become worn, and gaps form between the fork race (613A) and the frame race (611). When the ball bearings (612) are worn, the fastening device (70) must be readjusted to press the stem (93) down so the bearings do not contain gaps. However, a specialized tool is required to provide adequate force to the fastening device (70) and this requires a professional service.

Further, the headset assembly (60) does not have any feature to effectively absorb vibrations occurring among the end cap (62), shank (921) and bearing (61), so that the vibrations will cause wear to the end cap (62) and bearing (61) and may break the shank (921).

The primary objective of the present invention is to provide a bearing assembly to mitigate or obviate aforementioned problems of a conventional bearing assembly.

The bearing assembly in accordance with the present invention is mounted around a shank of a front fork of a bicycle and has a bearing with a frame race, a fork race and multiple ball bearings mounted between the frame race and the fork race, a buffer ring and an end cap. The buffer ring is mounted on an outer face of the bearing and has a buffer segment abutting securely an outer face of the fork race. The end cap is mounted securely adjacent to the buffer ring and has an inner abutting an outer face of the buffer segment.

The buffer segment is resilient, so can effectively absorb vibrations in the bearing, the end cap and the shank and is mounted compressed to ensure the buffer presses against the end cap, the bearing and the shank even after the ball bearing have worn down.. Accordingly, the steering apparatus is easily assembled and operates smoothly.

Other objectives, advantages and novel features of the invention will become more apparent from the following detailed description when taken in conjunction with the accompanying drawings.

### IN THE DRAWINGS

Fig. 1 is an exploded perspective view of an apparatus of a bicycle with two bearing assemblies in accordance with the present invention;
Fig. 2 is a front view in partial section of the apparatus with the bearing assemblies in Fig. 1;
Fig. 3 is an enlarged front view in partial section of the apparatus in Fig. 2;
Fig. 4 is a front view in partial section of a apparatus of a bicycle with two conventional bearing assemblies in accordance with the prior art; and
Fig. 5 is an enlarged front view in partial section of the apparatus in Fig. 4.

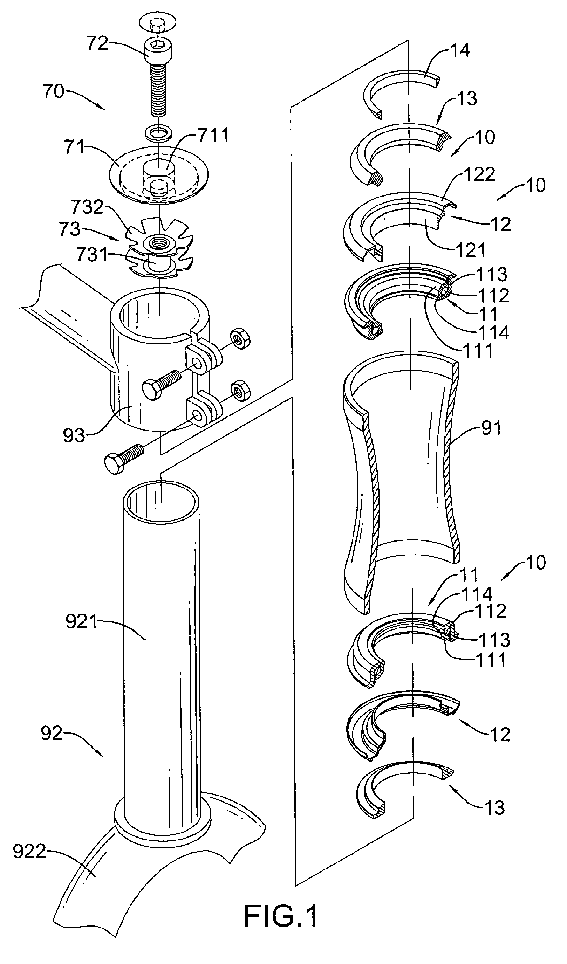

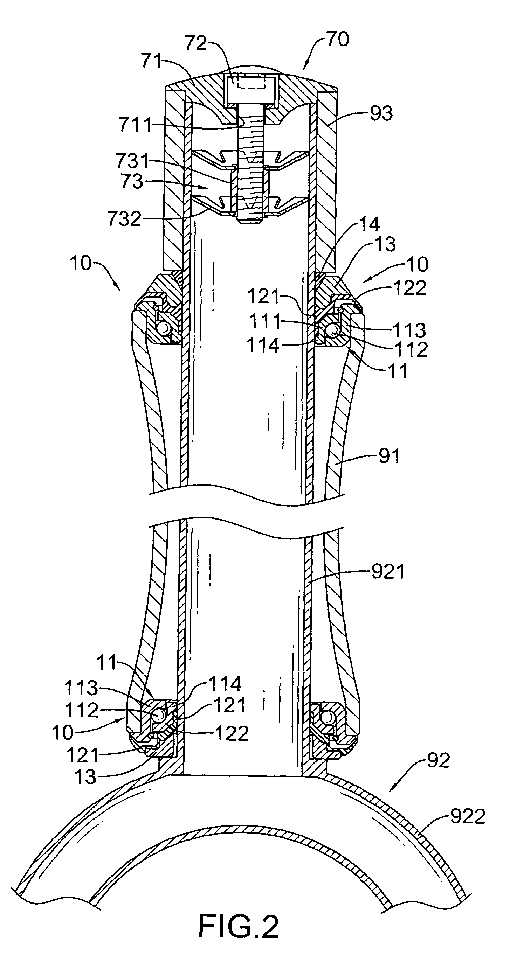

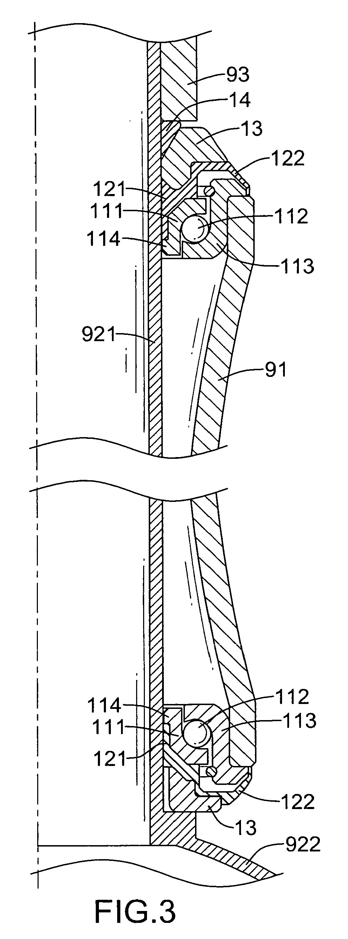

With reference to Figs. 1 to 3, a steering apparatus of a bicycle has a front fork (92), a head tube (91), a headset assembly , a stem (93) and a fastening device (70). The front fork (92) is connected to a front wheel and has a shank. The shank (921) has a top end and an outer surface. The head tube (91) is mounted around the shank (921) of the front fork (92) and has a top end and a bottom end.

The headset assembly comprises two bearing assemblies (10) including an upper bearing assembly and a lower bearing assembly. The bearing assemblies (10) are respectively attached to the top end and the bottom end of the head tube (91). The bearing assembly (10) in accordance with the present invention has a bearing (11), a buffer ring (12), an end cap (13) and an optional protection ring (14). The bearing (11) is mounted on the corresponding end of the head tube (91) around the shank (911) of the front fork (92) and has a frame race (113), a fork race (111) and multiple ball bearings (112). The frame race (113) is mounted securely on the corresponding end of the head tube (91) and rotatably around the shank (921) of the front fork (92) and has an outer face. The fork race (111) is mounted rotatably on the outer face of the frame race (113), securely around the shank (921) of the front fork (92) and has an inner face, an outer face and an optional retaining lip (114). The inner face of the fork race (111) in mounted adjacent to the outer face of the frame race (113). The retaining lip (114) is formed on and protrudes radially from the outer face of the fork race (111). The ball bearings (112) are mounted rotatably between the outer face of the frame race (113) and the inner face of the fork race (111) to allow smooth rotation between the frame race (113) and the fork race (111).

The buffer ring (12) is made of high-density rubber, is resilient and mounted adjacent to the outer end of the fork race (111) around the shank (921) of the front fork (92) and has an outer face, a buffer segment (121) and an optional protection segment (122). The mounting segment (121) abuts and rotates simultaneously with the outer face of the fork race (111). To mount the buffer ring (12), the buffer segment (121) is compressed, and inserted between the shank (921) of the front fork (92) and the fork race (111), then is allowed to expand and securely hold the front fork (92), whilst pressing the front race (111) firmly. The buffer segment (121) has a mounting protrusion. The mounting protrusion of the buffer section (121) may abut the retaining lip (114) of the fork race (111). The protection segment (122) of the buffer ring (12) is formed on and protrudes outwardly from the buffer ring (12) and covers the outer face of the frame race (113) to prevent water or dust from entering the bearing (11).

The end cap (13) is mounted securely on and rotates simultaneously with the buffer ring (12) and has an inner face. The inner face of the end cap (13) abuts the outer face of the buffer ring (12) to compress the buffer ring (12). The end cap (13) presses the buffer ring (12) towards the bearing (11). The protection ring (14) is mounted on the end cap (13) of the upper bearing assembly (10) and around the shank (921) of the front fork (92) to prevent water or dust from entering into a gap formed between the shank (921) and the end cap (13).

The stem (93) is mounted securely around the top end of the shank (921) of the front fork (92) and abuts securely against the end cap (13) of the upper bearing assembly (10). When the stem (93) is turned, the front fork (92) turns simultaneously to turn the front wheel in a desired direction.

The fastening device (70) is mounted on the top end of the shank (921) of the front fork (92) and has a top cap (71), a stem bolt (72) and a fastening nut (73). The fastening device (70) has a structure that may be the same as a conventional structure and further description has been omitted.

Tightening the fastening nut (73) pushes the top cap (71) towards the stem (93) that is in turn, pushed firmly against the end cap (13) of the upper bearing assembly (10), creating an axial force to act on the buffer sections (121) of the buffer rings (12) causing the bearing assemblies to be compressed. Because the buffer ring (12) is resilient, the buffer segments (121) are deformed. The deformation of the buffer rings (12) allows the bearing assemblies (10) to firmly hold the shank (921) even when the axial force is more or less than a desired level. Therefore, assembly of the steering apparatus is easy and efficient.

Because the buffer ring (12) is resilient, vibrations occurring between the shank (921) and the end cap (13) can be effectively absorbed by the buffer ring (12).

Additionally, as the ball bearings (112) gradually wear, the compressed buffer sections (121) of the buffer rings (12) will automatically and gradually expand to ensure the fork race (111) constantly abuts the ball bearings (112) and prevents gaps from occurring among the ball bearings (112), the fork race (111) and the frame race (113). Accordingly, the bearing (11) still operates smoothly after long term use, and the useful life of the bearings (11) is prolonged.

## Claims

**1.** A bearing assembly (10) for a steering apparatus of a bicycle comprising
a bearing (11) having
a frame race (113) having an outer face;
a fork race (111) being mounted rotatably on the outer face of the frame race (13) and having an inner face and an outer face; and
multiple ball bearings (112) being mounted rotatably between the outer face of the frame race (113) and the inner face of the fork race (111);
a buffer ring (12) being resilient and mounted adjacent to the outer end of the fork race (111) and having
an outer face; and
a buffer segment (121) abutting securely the inner face of the fork race (111) and having a mounting protrusion; and
an end cap (13) being mounted securely on and rotating simultaneously with the buffer ring (12) and having an inner face abutting the outer face of the buffer ring (12) to compress and deform the buffer ring (12).

**2.** The bearing assembly as claimed in claim 1, wherein the buffer ring (12) further has
a protection segment (122) being formed on and protruding outwardly from the buffer ring (12) and covering the outer face of the frame race (113).

**3.** The bearing assembly as claimed in claim 1 or 2, wherein
the fork race (111) further has a retaining lip (114) being formed on and protruding radially from the outer face of the fork race (111); and
the mounting protrusion of the buffer segment (121) abuts the retaining lip (114) of the fork race (111).

**5.** The bearing assembly as claimed in claim 1 or 2 further comprising a protection ring (14) being mounted on the end cap (13).

## Amended claims

### Amended claims in accordance with Rule 137(2) EPC.

**1.** A bearing assembly (10) for a steering apparatus of a bicycle comprising
a bearing (11) having
a frame race (113) having an inner face;
a fork race (111) being mounted rotatably on the inner face of the frame race (113) and having an inner face and an outer face facing to the inner face of the frame race (113); and
multiple ball bearings (112) being mounted rotatably between the inner face of the frame race (113) and the outer face of the fork race (111);
a buffer ring (12) being resilient and mounted adjacent to the outer end of the fork race (111) and having
an outer face; and
a buffer segment (121) being deformable, abutting securely the inner face of the fork race (111) and having a mounting protrusion; and
an end cap (13) being mounted securely on and rotating simultaneously with the buffer ring (12) and having an inner face abutting the outer face of the buffer ring (12) to compress and deform the buffer ring (12).

**2.** The bearing assembly as claimed in claim 1, wherein the buffer ring (12) further has
a protection segment (122) being formed on and protruding outwardly from the buffer ring (12) and covering the outer face of the frame race (113).

**3.** The bearing assembly as claimed in claim 1 or 2, wherein
the fork race (111) further has a retaining lip (114) being formed on and protruding radially from the inner face of the fork race (111); and
the mounting protrusion of the buffer segment (121) abuts the retaining lip (114) of the fork race (111).

**4.** The bearing assembly as claimed in claim 1 or 2 further comprising a protection ring (14) being mounted on the end cap (13).
